# EUROPÄISCHE PATENTSCHRIFT

(11) **EP 1 026 039 B1**
(45) Veröffentlichungstag und Bekanntmachung des Hinweises auf die Patenterteilung: **26.11.2003**
(21) Anmeldenummer: 99124171.2
(22) Anmeldetag: 03.12.1999
(51) Int. Cl.: B60R 5/04

(54) **Wickelvorrichtung für eine Werkstoffbahn einer Rückhaltevorrichtung od. dgl. eines Fahrzeugs, wie z.B. eines Kombinationskraftwagens**
Winder for a sheet of a vehicle restraining device or similar, e.g. for estate cars
Enrouleur pour une bande d'un dispositif de retenue de véhicule ou similaire, p.e. pour breaks

(30) Priorität: 02.02.1999 DE 19903811
(43) Veröffentlichungstag der Anmeldung: 09.08.2000
(73) Patentinhaber: BOS GmbH & Co. KG, 73760 Ostfildern (DE)
(72) Erfinder: Crisp, Terence Sam, 3140 Keerbergen (BE)
(74) Vertreter: Patentanwälte Ostriga & Sonnet

(56) Entgegenhaltungen:
- DE-U- 29 901 636
- US-A- 4 482 137

## Beschreibung

Die Erfindung betrifft eine Wickelvorrichtung für eine Werkstoffbahn einer Rückhaltevorrichtung od. dgl. eines Fahrzeugs, wie z.B. eines Kombinationskraftwagens gemäß dem Oberbegriff des Anspruchs 1. Eine solche Wickelvorrichtung ist in der DE 29 41 711 A1 beschrieben.

Die Wickelvorrichtung gemäß der DE 29 41 711 A1 stellt eine Laderaumabdeckung für den Kofferraum eines Kombinationskraftwagens dar. Die bekannte Wickelvorrichtung (s. DE 29 41 711 A1 Fig. 2 Pos. 10) weist eine zwischen zwei axial einfederbaren Endkappen durchgehend angeordnete Vorrichtungsachse auf. Beide äußeren Endbereiche der Vorrichtungsachse sind drehfest in der zugehörigen Endkappe aufgenommen. Bei der bekannten Wickelvorrichtung ist ein als Schraubenfeder ausgebildeter Torsionsfederspeicher mit seinem ersten Einspannende etwa im mittleren Bereich der Vorrichtungsachse drehfest mit dieser verbunden. Das zweite Einspannende der Schraubenfeder ist benachbart der zugehörigen Endkappe drehfest mit der etwa rohrartigen Wickelwelle verbunden, welche die Anordnung Vorrichtungsachse/Schraubenfeder koaxial umhüllt.

Gemäß der DE 29 41 711 A1 können innerhalb der rohrartigen Wickelwelle auf der durchgehenden Vorrichtungsachse entweder ein Torsionsfederspeicher oder - bei größerem Kraftbedarf bzw. bei größerer axialer Länge der Wickelvorrichtung - zwei Torsionsfederspeicher vorgesehen sein.

Gemäß der DE 29 41 711 A1 ist an der Außenmantelfläche der Wickelwelle der innere Rand der Werkstoffbahn (z.B. Tuchbahn) befestigt. Dazu trägt der innere Rand der Werkstoffbahn einen Keder, welcher in eine sich axial erstreckende hinterschnittene Kedernut der walzverformten rohrartigen Wickelwelle eingeschoben ist.

Zum Aufziehen bzw. Spannen des von der DE 29 41 711 A1 bekannten Torsionsfederspeichers wird mindestens eine der beiden Endkappen entgegen der Rückstellkraft einer gesonderten Schraubendruckfeder auf der Vorrichtungsachse axial in Richtung der benachbarten Stirnseite der Wickelwelle nach innen gedrückt, wobei die Endkappe aus ihrem drehfesten Verbund mit der Wickelwelle gelöst wird. Nachdem der Torsionsfederspeicher anschließend aufgezogen ist, kann dieser durch eine entgegengesetzte axiale Rückstellbewegung der Endkappe blockiert werden. Eine selbsttätige Aktivierung des aufgezogenen Torsionsfederspeichers erfolgt beim Einsetzen der Anordnung in das fahrzeugseitige Einbaufeld, weil beim Einsetzen die betreffende Endkappe wiederum axial nach innen gedrückt und dadurch aus ihrem drehfesten Verbund mit der Wickelwelle gelöst wird. Bei der bekannten Wickelvorrichtung kann der Torsionsfederspeicher nur nach der Fertigmontage der gesamten Anordnung aufgezogen werden.

Ausgehend von der an sich vorteilhaften und im großen Umfange in der Praxis bewährten bekannten Wickelvorrichtung gemäß der DE 29 41 711 A1, liegt der Erfindung die Aufgabe zugrunde, die bekannte Wickelvorrichtung hinsichtlich ihres Aufbaus und ihres Herstellungsaufwandes zu vereinfachen.

Entsprechend der Erfindung wird diese Aufgabe durch die Merkmale des Anspruchs 1 gelöst. Die Vorrichtungsachse ist, mit ihrem inneren Endbereich voran axial in die Wickelwelle frei hineinragend, relativ zur Wickelwelle axial verschieblich angeordnet, wobei das erste Einspannende des Torsionsfederspeichers am inneren Endbereich der Vorrichtungachse befestigt ist, und wobei der äußere Endbereich der Vorrichtungsachse Primärkupplungsmittel aufweist, die durch axiale Verschiebung der Vorrichtungsachse relativ zur Wickelwelle mit die Wickelwelle ankuppelnden Sekundärkupplungsmitteln in oder außer Eingriff versetzbar sind.

Im Unterschied zur Wickelvorrichtung gemäß der DE 29 41 711 A1 weist die erfindungsgemäße Wickelvorrichtung keine durchgehende Vorrichtungsachse auf. Da die erfindungsgemäße Vorrichtungsachse, mit ihrem inneren Ende voran axial in die Wickelwelle frei hineinragend, relativ zur Wickelwelle axial verschieblich angeordnet ist, braucht ein bestimmter Torsionsfedermotor (bestehend aus dem Torsionsfederspeicher und der Vorrichtungsachse) nicht zwingend mit einer Wickelwelle bestimmter Länge kombiniert zu werden.

Vielmehr ist der erfindungsgemäße Torsionsfedermotor unabhängig von einer bestimmten Wickelwellenlänge. Dies bedeutet, daß jeweils ein und derselbe Torsionsfedermotor-Typ für eine Vielzahl individuell unterschiedlicher Wickelwellen-Längen eingesetzt werden kann. Es liegt auf der Hand, daß hiermit sowohl eine bauliche Vereinfachung als auch eine Vereinfachung der Lagerhaltung, insgesamt also der Vorteil einer weniger aufwendigen Fertigung, erzielt wird.

Dadurch, daß - wie vorerwähnt - der innere Endbereich der nicht durchgehenden Vorrichtungsachse relativ zur Wickelwelle axial verschieblich angeordnet ist, ist zugleich die Voraussetzung weiterer Erfindungsmerkmale gegeben, wonach der äußere Bereich der Vorrichtungsachse Primärkupplungsmittel aufweist, welche durch die axiale Verschiebung der Vorrichtungsachse relativ zur Wickelwelle mit die Wickelwelle ankuppelnden Sekundärkupplungsmitteln in oder außer Eingriff versetzbar sind.

Eine besondere Bedeutung erhalten die miteinander in Wirkverbindung stehenden Primärkupplungsmittel und Sekundärkupplungsmittel durch eine Ausgestaltung der Erfindung, die darin besteht, daß in den Kraftfluß zwischen dem zweiten Einspannende des Torsionsfederspeichers und der Wickelwelle ein von der Vorrichtungsachse aufgenommenes Mitnehmerteil eingegliedert ist. Dieses Mitnehmerteil bildet die Sekundärkupplungsmittel, ist gemeinsam mit der Vorrichtungsachse in die Wickelwelle einsetzbar und mit letzterer kraft- und/oder formschlüssig drehfest verbindbar. Durch diese Erfindungsmerkmale ist es möglich geworden, den Torsionsfedermotor vor seiner Montage, d.h. vor dem Einsetzen in die Wickelwelle, aufzuziehen und im aufgezogenen bzw. gespannten Zustand zu lagern. Die Montage des Torsionsfedermotors besteht sodann im wesentlichen nur darin, diesen, mit dem inneren Endbereich seiner Vorrichtungsachse voran, axial in die Wickelwelle so weit hineinzuschieben, bis eine formschlüssige drehfeste Verbindung zwischen dem Mitnehmerteil und der Wickelwelle hergestellt ist.

Eine Variante der Erfindung kann in diesem Zusammenhang darin bestehen, daß das in den Kraftfluß zwischen dem zweiten Einspannende des Torsionsfederspeichers und der Wickelwelle eingegliederte Mitnehmerteil eine die Vorrichtungsachse koaxial umgebende Mitnehmerhülse ist. Diese Mitnehmerhülse bildet zur drehfesten Verbindung mit dem zweiten Einspannende des Torsionsfederspeichers einen Befestigungsbereich.

Dabei ist die Kupplungsanordnung derart ausgestaltet, daß der äußere Endbereich der Vorrichtungsachse als Primärkupplungsmittel in Axialrichtung ausrückbare Mitnehmerflächen, wie z.B. Abflachungen od. dgl., bildet, welche mit korrespondierenden axial ausrückbaren Mitnehmergegenflächen, den Sekundärkupplungsflächen, zusammenwirken, die in einer zentralen Kupplungsaussparung der Mitnehmerhülse vorgesehen sind.

Andere Erfindungsmerkmale sind zusätzlichen Unteransprüchen zu entnehmen.

In den Zeichnungen ist ein bevorzugtes Ausführungsbeispiel entsprechend der Erfindung näher dargestellt, es zeigt
Fig. 1 eine Seitenansicht einer die wesentlichen Bauteile zeigenden Wickelvorrichtung; die rohrförmige Wickelwelle ist lediglich als Teillänge und im übrigen mehr schematisch dargestellt,
Fig. 2 unter Weglassung der in Fig. 1 gezeigten Wickelwelle einen Längsschnitt entsprechend der Schnittlinie II-II in Fig. 1,
Fig. 3, 4 und 5 Radialschnitte entsprechend den Schnittlinien III-III, IV-IV und V-V in Fig. 1 und
Fig. 6 und 7 auseinandergezogene räumliche Darstellungen, etwa entsprechend den in Fig. 1 eingetragenen und mit VI und VII bezeichneten Blickrichtungspfeilen.

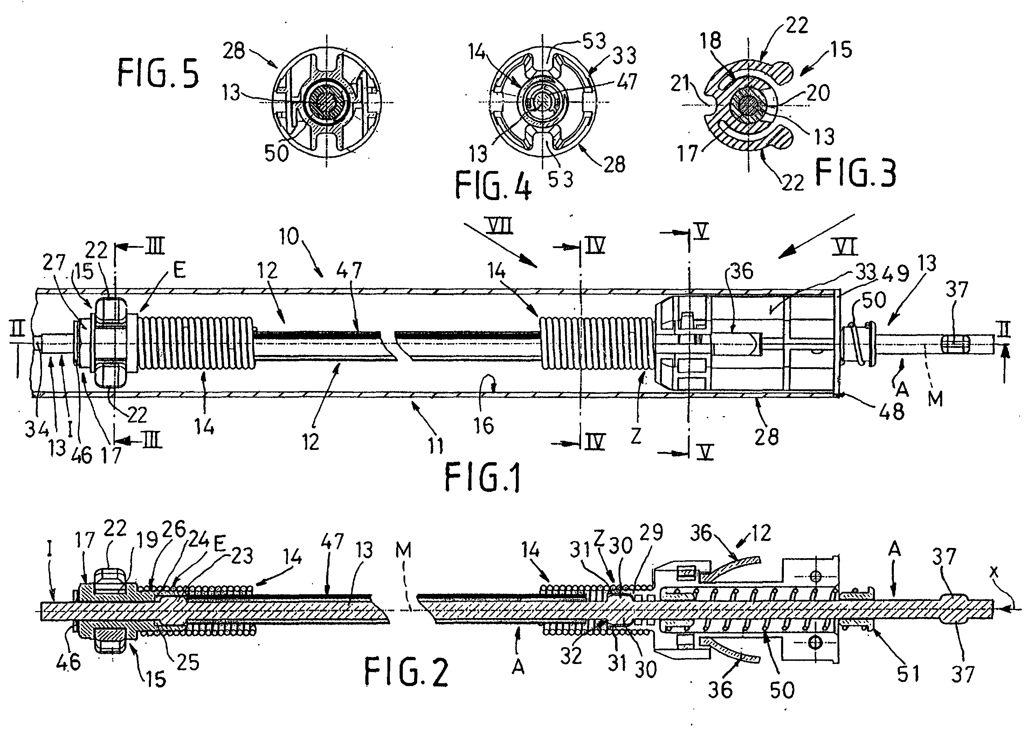

In Fig. 1 ist eine teilweise dargestellte Wickelvorrichtung insgesamt mit der Bezugsziffer 10 bezeichnet. Die Wickelvorrichtung 10 weist eine rohrförmige Wickelwelle 11 sowie einen insgesamt mit 12 bezeichneten Torsionsfedermotor auf.

Der Torsionsfedermotor 12 besitzt eine Vorrichtungsachse 13, sowie einen als Schraubenfeder ausgebildeten Torsionsfederspeicher 14, dessen erstes Einspannende mit E und dessen zweites Einspannende mit Z bezeichnet ist.

Das erste Einspannende E des Torsionsfederspeichers 14 ist drehfest an der Vorrichtungsachse 13 angeordnet, während das zweite Einspannende Z des Torsionsfederspeichers 14 in der nachfolgend noch näher zu beschreibenden Weise mit der Wickelwelle 11 drehfest ist.

Der innere Endbereich der Vorrichtungsachse 13 ist mit I bezeichnet, während der äußere Endbereich der Vorrichtungsachse 13 das Bezugszeichen A trägt.

Der innere Endbereich I der Vorrichtungsachse 13 ist stirnseitig mit einer Lageranordnung 15 versehen, welche sich an der Innenmantelfläche 16 der Wickelwelle 11 axial verschieblich abstützt.

Die Lageranordnung 15 weist einen stirnseitig des inneren Endbereichs I der Vorrichtungsachse 13 befestigten Lagerzapfen 17 und eine auf dem Lagerzapfen 17 axial gesicherte, mit der Wickelwelle 11 auf Drehmitnahme verbundene Lagerschale 18 (Fig. 3) auf.

Der Lagerzapfen 17 besitzt eine zu seiner Lagerzapfenachse (identisch mit der Längsmittelachse M der Anordnung) koaxiale, in seine Außenmantelfläche eingeformte Ringnut 19, in welche die Lagerschale 18 zu ihrer Axialsicherung eingreift. Die Lagerschale 18 ist mit einem sich radial und axial erstreckenden Schlitz 20 versehen, so daß die Lagerschale 18 in die Nut 19 des Lagerzapfens 17 eingerastet werden kann. Lagerzapfen 17 und Lagerschale 18 bestehen zweckmäßig aus einem gewisse Lagereigenschaften und eine hinreichende Eigenelastizität aufweisenden Kunststoff.

Die Lagerschale 18 besitzt eine nach außen offene Axialnut 21 in welche eine nach innen vorragende Axialrippe 34 oder 35 der Wickelwelle 11 eingreift. Auf diese Weise ist die Lagerschale 18 drehfest mit der Wickelwelle 11 verbunden, so daß sich diese vermittels der Lagerschale 18 auf dem durch die Vorrichtungsachse 13 undrehbar gehaltenen Lagerzapfen 17 drehen kann.

Die Lagerschale 18 besitzt außerdem sich etwa in der Radialebene der Wickelwelle 11 erstreckende, etwa blattfederartige, stoffschlüssig angeformte Fortsätze 22, welche sich an der Innenmantelfläche 16 der Wickelwelle 11 in Axialrichtung gleitbar abstützen und so die Lagerschale 18 bezüglich der Wickelwellenachse (identisch mit der Längsmittelachse M) zentrieren.

Der innere Endbereich I der Vorrichtungsachse 13 bildet an seinem Stirnende Mitnehmerflächen, die aus Abflachungen 23 bestehen, welche der metallenen Vorrichtungsachse 13 etwa rippenförmig angeprägt sind. Die Abflachungen 23 wirken mit korrespondierenden Mitnehmerflächen 24 einer zentralen Aussparung 25 des Lagerzapfens 17 auf Drehmitnahme zusammen.

Außerdem bildet der Lagerzapfen 17 zur drehfesten Verbindung mit dem ersten Einspannende E des Torsionsfederspeichers 14 (Schraubenfeder) einen Befestigungsbereich 26 etwa in Form eines kreiszylindrischen Ansatzes. Der kreiszylindrische Ansatz 26 ist vom Einspannende E kraftschlüssig drehfest umgriffen. Außerdem ist es möglich, den vom Torsionsfederspeicher drehfest umgriffenen kreiszylindrischen Ansatz 26 ein wenig anzuschmelzen, um zusätzlich einen Formschluß zwischen dem ersten Einspannende E und dem kreiszylindrischen Ansatz 26 herbeizuführen.

Der Lagerzapfen 17 bildet an seiner dem Torsionsfederspeicher 14 abgewandten Stirnseite etwa nach Art eines Sechskants Drehmitnahmeflächen 27. Mittels der Drehmitnahmeflächen 27 kann der Torsionsfedermotor 12 in noch zu beschreibender Weise aufgezogen bzw. gespannt werden.

In den Kraftfluß zwischen dem zweiten Einspannende Z des Torsionsfederspeichers 14 und der Wickelwelle 11 ist ein Mitnehmerteil in Form einer die Vorrichtungsachse 13 koaxial umgebenden Mitnehmerhülse 28 eingegliedert. Die Mitnehmerhülse 28 bildet zur drehfesten Verbindung mit dem zweiten Einspannende Z des Torsionsfederspeichers 14 einen Befestigungsbereich 29. Der Befestigungsbereich der Mitnehmerhülse 28 stellt einen kreiszylindrischen Ansatz dar, der vom zweiten Einspannende Z des Torsionsfederspeichers 14 (Schraubenfeder) drehfest umgriffen ist.

Der äußere Endbereich A der Vorrichtungsachse 13 bildet als Primärkupplungsmittel in Axialrichtung x ausrückbare Mitnehmerflächen in Form von angeprägten flachen Rippen 30, welche mit korrespondierenden, axial ausrückbaren Mitnehmergegenflächen 31 zusammenwirken, die in einer zentralen Kupplungsaussparung 32 der Mitnehmerhülse 28 vorgesehen sind.

Die Mitnehmerhülse 28 weist an ihrer Außenmantelfläche 33 zwei nach außen offene Axialnuten 53 auf, in welche jeweils eine nach innen vorragende Axialrippe 34, 35 der Wickelwelle 11 eingreift.

Die Mitnehmerhülse 28 besitzt von ihrer Außenmantelfläche 33 nach außen vorragende, etwa blattfederartige Fortsätze 36, welche, sich an der Innenmantelfläche 16 der Wickelwelle 11 abstützend, die Mitnehmerhülse 28 bezüglich der Wickelwellenachse (identisch mit der Längsmittelachse M) zentrieren. Mit nicht gezeigten Einprägungen der Wickelwelle 11 können die beiden stoffschlüssig angeformten blattfederartigen Fortsätze 36 zugleich als widerhakenartige Arretierungsmittel dienen, die ein unbeabsichtigtes Herausziehen der Mitnehmerhülse 28 aus dem Innenraum der Wickelwelle 11 verhindern.

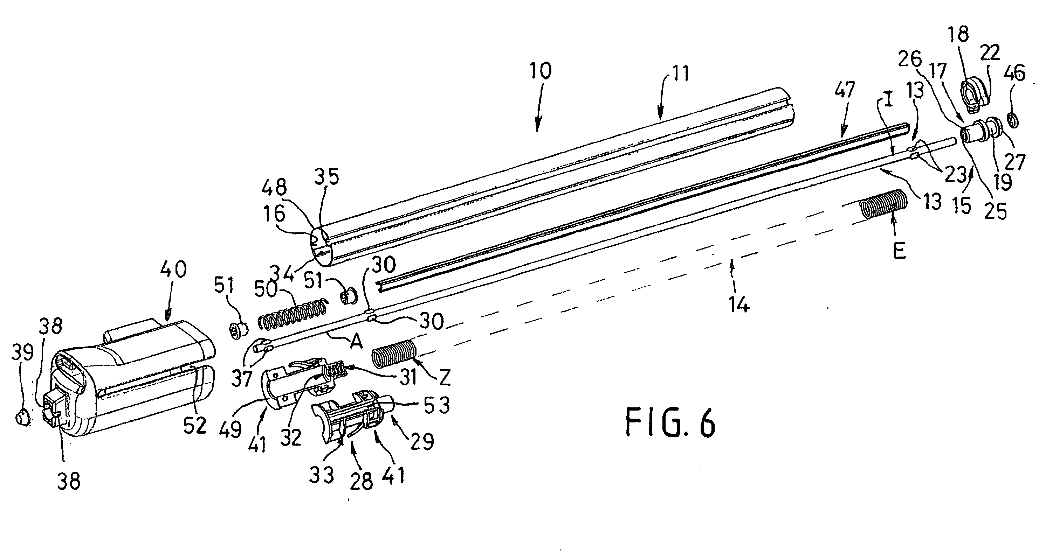

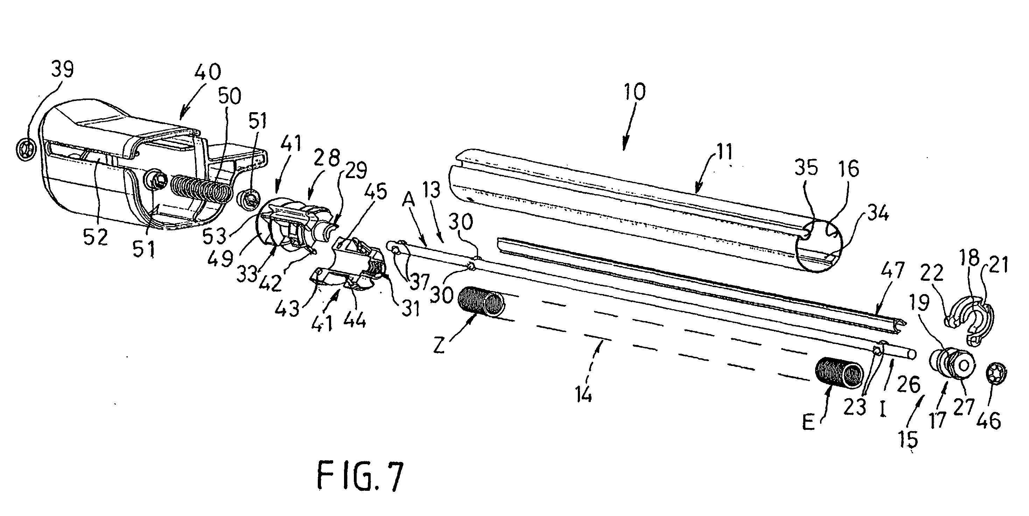

Der äußere Endbereich A der Vorrichtungsachse 11 ist drehfest sowie gegen Axialverschiebung gesichert in einer Endkappe 40 (s. Fig. 6 und 7) aufgenommen. Dazu weist der äußere Endbereich A der Vorrichtungsachse 13 in diametral gegenüberliegender Anordnung seitlich angeprägte, radial abstehende Rippen 37 auf, welche mit Sperrflächen 38, die außen an der Endkappe 40 angeordnet sind, zwecks drehfester Aufnahme zusammenwirken. Zur Axialsicherung der Vorrichtungsachse 13 bezüglich der Endkappe 40 dient insbesondere eine an sich bekannte innenverzahnte Fächerscheibe 39 aus Federstahl.

Aus den Fig. 6 und 7 ist deutlich zu erkennen, daß die Mitnehmerhülse 28 aus zwei baugleichen Schalen 41 zusammengesetzt ist, die Kunststoffspritzgußteile bilden. Jede Schale 41 weist patrizenartige Rastmittel 42, 43 auf, mit welchen matrizenartige Rastmittel 44, 45 korrespondieren.

Aus den Fig. 6 und 7 ist auch zu erkennen, daß der innere Endbereich I der Vorrichtungsachse 13 an der Stirnseite des Lagerzapfens 17 mittels einer innenverzahnten Federstahl-Axialsicherungs-Fächerscheibe 46 axial festgelegt ist.

Um unangenehme Klappergeräusche zu vermeiden, ist ein im Querschnitt etwa Ω-förmiges schlitzrohrartiges Kunststoff-Bauteil 47 auf die Vorrichtungsachse 13 radial aufgerastet. Das Kunststoffbauteil 47 verhindert demnach, daß der Torsionsfederspeicher 14 gegen die Vorrichtungsachse 13 schlägt.

Montage- und Funktionsweise der Wickelvorrichtung 10 sind wie folgt zu erläutern:

Der in Fig. 2 dargestellte Torsionsfedermotor 12 wird zunächst aufgezogen bzw. gespannt. Dazu wird die Vorrichtungsachse 13 in Axialrichtung x relativ zur Mitnehmerhülse 28 nach links verschoben, so daß die rippenartigen Abflachungen 30 (Primärkupplungsmittel) der Vorrichtungsachse 13 außer Eingriff mit den Gegenaussparungen 31 (Sekundärkupplungsmittel) der Mitnehmerhülse 28 geraten. Ist diese gelüftete Kupplungsstellung erreicht, so wird die Mitnehmerhülse 28 gegen Drehung gesichert und der Torsionsfedermotor 12 mittels eines die Drehmitnahmeflächen 27 des Lagerzapfens 17 ergreifenden Drehantriebs mit einer bestimmten Umdrehungszahl aufgezogen.

Sobald der Torsionsfederspeicher 14 aufgezogen ist, wird die Vorrichtungsachse 13 entgegen der Axialrichtung x nach rechts verschoben, so daß die Primärkupplungsmittel 30 und die Sekundärkupplungsmittel 32 sich wieder in Eingriff befinden. Auf diese Weise hat der Torsionsfedermotor 12 seine für den Betrieb erforderliche potentielle Energie erhalten. Durch einfache provisorische Sicherungsmittel, wie z.B. durch eine Klammer, kann der aufgezogene Torsionsfedermotor 12 gegen ein unbeabsichtigtes Abwickeln gesichert und bis zu seiner Verwendung in der Fertigung bevorratet werden.

Zu seiner Montage wird der aufgezogene Torsionsfedermotor 12 gemäß Fig. 2 mit dem inneren Endbereich I der Vorrichtungsachse 13 voran in Axialrichtung x in den Innenraum der Wickelwelle 11 so weit eingeschoben, bis der Kragen 49 der Mitnehmerhülse 28 gegen die Stirnfläche 48 der Wickelwelle 11 schlägt. Vor dem Einschieben werden Lagerschale 18 und Mitnehmerhülse 28 mit ihren Axialnuten 21, 53 bezüglich der Axialrippen 34, 35 ausgerichtet. Auf diese Weise sind Lagerschale 18 und Mitnehmerhülse 28 auf Drehmitnahme mit der Wickelwelle 11 verbunden.

Sodann wird die Endkappe 40 mit ihren Sperrflächen 38 über die am äußeren Endbereich A der Vorrichtungsachse 13 angeformten Rippen 37 geschoben, welche mit einer Schraubendruckfeder 50 und Bundbuchsen 51 zur Aufnahme der Enden der Schraubendruckfeder 50 versehen ist.

Nach Beseitigung der vorerwähnten provisorischen Sicherungsmittel wird die Endkappe 40 zum Einsetzen der Wickelvorrichtung 10 in das kraftfahrzeugseitige Einbaufeld entgegen der Rückstellkraft der Feder 50 in Axialrichtung x bewegt. Hierbei bewegt sich zugleich die Vorrichtungsachse 13 in Axialrichtung x, was zur Folge hat, daß sich die rippenartigen Abflachungen 30 (Primärkupplungsmittel) nach links aus den Gegenaussparungen 31 (Sekundärkupplungsmittel) der Mitnehmerhülse 28 hinausbewegen, so daß der Torsionsfedermotor 12 aktiviert ist. Auf diese Weise kann die nicht dargestellte Werkstoffbahn mittels eines Handhabungsrandes aus dem Ausziehschlitz 52 der Wickelvorrichtung 10 entgegen dem Drehmoment des Torsionsfedermotors ausgezogen und an fahrzeugseitigen Befestigungsstellen lösbar festgelegt werden.

Ergänzend ist zu bemerken, daß in den Zeichnungen nur ein Endbereich der Wickelvorrichtung 10 dargestellt ist. Der andere Endbereich kann, wenn die Wickelvorrichtung 10 nur einen Torsionsfedermotor 12 besitzt, z.B. mit irgendeiner endkappenartigen Drehlagerung versehen sein. Grundsätzlich ist es aber auch möglich, die Wickelvorrichtung 10 mit den erfindungsgemäßen Elementen als Doppelanordnung aufzubauen. Hierbei ist zu berücksichtigen, daß der Drehsinn der beiden Torsionsfederspeicher 14 entgegengesetzt sein muß.

## Patentansprüche

1. Wickelvorrichtung (10) für eine Werkstoffbahn einer Rückhaltevorrichtung od. dgl. eines Fahrzeugs, wie z.B. eines Kombinationskraftwagens, mit mindestens einer einbaufeldseitig drehfest lösbar gehaltenen Vorrichtungsachse (13), mit einem die Vorrichtungsachse (13) umgebenden Torsionsfederspeicher (14), dessen erstes Einspannende (E) an der Vorrichtungsachse (13) und dessen zweites Einspannende (Z) benachbart einem axial äußeren Endbereich (A) der Vorrichtungsachse (13) an einer koaxial zur Vorrichtungsachse (13) gelagerten, letztere (13) und den Torsionsfederspeicher (14) aufnehmenden hohlen Wickelwelle (11)befestigt ist, an deren Außenmantelfläche der innere Rand der Werkstoffbahn gehalten ist, wobei der äußere Rand der abgewickelten Werkstoffbahn fahrzeugseitig lösbar zu befestigen ist, wobei das erste Einspannende (E) des Torsionsfederspeichers (14) an der Vorrichtungsachse (13) befestigt ist, und wobei der äußere Endbereich (A) der Vorrichtungsachse (13) Primärkupplungsmittel (30) aufweist, die mit die Wickelwelle (11) ankuppelnden Sekundärkupplungsmitteln (31) in oder außer Eingriff versetzbar sind, **dadurch gekennzeichnet, dass** die Vorrichtungsachse (13), mit ihrem axial inneren Endbereich (I) voran, axial in die Wickelwelle (11 ) frei hineinragend, angeordnet ist, dass die Vorrichtungsachse (13) relativ zur Wickelwelle (11) axial verschieblich angeordnet ist, dass das erste Einspannende (E) am inneren Endbereich (I) der Vorrichtungsachse (13) befestigt ist und dass die Primärkupplungsmittel (30) durch axiale Verschiebung der Vorrichtungsachse (13) relativ zur Wickelwelle (11 ) mit den Sekundärkupplungsmitteln (31) zusammenwirkt.

2. Wickelvorrichtung nach Anspruch 1, **dadurch gekennzeichnet, daß** in den Kraftfluß zwischen dem zweiten Einspannende (Z) des Torsionsfederspeichers (14) und der Wickelwelle (11) ein von der Vorrichtungsachse (13) aufgenommenes Mitnehmerteil (28) eingegliedert ist, welches die Sekundärkupplungsmittel (31) bildet und welches gemeinsam mit der Vorrichtungsachse (13) in die Wickelwelle (11) (eingesetzt) und mit dieser kraft- und/oder formschlüssig drehfest verbunden ist.

3. Wickelvorrichtung nach Anspruch 1, **dadurch gekennzeichnet, daß** der innere Endbereich (I) der Vorrichtungsachse (13) stirnseitig mit einer Lageranordnung (15) versehen ist, welche sich an der Innenmantelfläche (16) der Wickelwelle (11) axial verschieblich abstützt.

4. Wickelvorrichtung nach Anspruch 3, **dadurch gekennzeichnet, daß** die Lageranordnung (15) einen stirnseitig des inneren Endbereichs (I) der Vorrichtungsachse (13) befestigten Lagerzapfen (17) und eine auf letzterem axial gesicherte, in der Wickelwelle (11) gegen Mitdrehen gesicherte Lagerschale (18) aufweist.

5. Wickelvorrichtung nach Anspruch 4, **dadurch gekennzeichnet, daß** der Lagerzapfen (17) eine zu seiner Lagerzapfenachse (M) koaxiale, in seine Außenmantelfläche eingeformte Ringnut (19) aufweist, in welche die Lagerschale (18) zu ihrer Axialsicherung eingreift.

6. Wickelvorrichtung nach Anspruch 4 oder nach Anspruch 5, **dadurch gekennzeichnet, daß** die Lagerschale (18) radial auf den Lagerzapfen (17) aufrastbar ist.

7. Wickelvorrichtung nach einem der Ansprüche 4 bis 6, **dadurch gekennzeichnet, daß** die Lagerschale (18) eine nach außen offene Axialnut (21) aufweist, in welche eine nach innen vorragende Axialrippe (34, 35) der Wickelwelle (11) eingreift.

8. Wickelvorrichtung nach einem der Ansprüche 4 bis 7, **dadurch gekennzeichnet, daß** die Lagerschale (18) sich in der Radialebene der Wickelwelle (11) erstreckende, etwa blattfederartige Fortsätze (22) bildet, welche, sich an der Innenmantelfläche (16) der Wickelwelle (11) abstützend, die Lagerschale (18) bezüglich der Wickelwellenachse (M) zentrieren.

9. Wickelvorrichtung nach einem der Ansprüche 3 bis 8, **dadurch gekennzeichnet, daß** der innere Endbereich (I) der Vorrichtungsachse (13) an seinem Stirnende Mitnehmerflächen (23), wie z.B. Abflachungen od. dgl., bildet, welche mit korrespondierenden Mitnehmerflächen (24) einer zentralen Aussparung (25) des Lagerzapfens (17) auf Drehmitnahme zusammenwirken.

10. Wickelvorrichtung nach einem der Ansprüche 4 bis 9, **dadurch gekennzeichnet, daß** der Lagerzapfen (17) zur drehfesten Verbindung mit dem ersten Einspannende (I) des Torsionsfederspeichers (14) einen Befestigungsbereich (26) bildet.

11. Wickelvorrichtung nach Anspruch 10, **dadurch gekennzeichnet, daß** der Befestigungsbereich des Lagerzapfens (17) einen kreiszylindrischen Ansatz (26) und der Torsionsfederspeicher (14) eine Schraubenfeder bilden, deren Einspannende (E) den kreiszylindrischen Ansatz (26) kraftschlüssig drehfest umgreift.

12. Wickelvorrichtung nach einem der Ansprüche 4 bis 11, **dadurch gekennzeichnet, daß** der Lagerzapfen (17) an oder benachbart seiner dem Torsionsfederspeicher (14) abgewandten Stirnseite Drehmitnahmeflächen (27) bildet.

13. Wickelvorrichtung nach einem der Ansprüche 1 bis 12, **dadurch gekennzeichnet, daß** das in den Kraftfluß zwischen dem zweiten Einspannende (Z) des Torsionsfederspeichers (14) und der Wickelwel le (11) eingegliederte Mitnehmerteil eine die Vorrichtungsachse (13) koaxial umgebende Mitnehmerhülse (28) ist.

14. Wickelvorrichtung nach Anspruch 13, **dadurch gekennzeichnet, daß** die Mitnehmerhülse (28) zur drehfesten Verbindung mit dem zweiten Einspannende (Z) des Torsionsfederspeichers (14) einen Befestigungsbereich (29) bildet.

15. Wickelvorrichtung nach Anspruch 14, **dadurch gekennzeichnet, daß** der Befestigungsbereich der Mitnehmerhülse (28) einen zum inneren Endbereich (I) der Vorrichtungsachse weisenden kreiszylindrischen Ansatz (29) und der Torsionsfederspeicher (14) eine Schraubenfeder bilden, deren zweites Einspannende (Z) den kreiszylindrischen Ansatz (29) kraftschlüssig drehfest umgreift.

16. Wickelvorrichtung nach einem der Ansprüche 13 bis 15, **dadurch gekennzeichnet, daß** der äußere Endbereich (A) der Vorrichtungsachse (13) als Primärkupplungsmittel in Axialrichtung (x) ausrückbare Mitnehmerflächen (30), wie z.B. Abflachungen od. dgl., bildet, welche mit korrespondierenden axial ausrückbaren Mitnehmergegenflächen (31), den Sekundärkupplungsmitteln, zusammenwirken, die in einer zentralen Kupplungsaussparung (32) der Mitnehmerhülse (28) vorgesehen sind.

17. Wickelvorrichtung nach einem der Ansprüche 13 bis 16, **dadurch gekennzeichnet, daß** die Mitnehmerhülse (28) an ihrer Außenmantelfläche (33) mindestens eine nach außen offene Axialnut (53) aufweist, in welche jeweils eine nach innen vorragende Axialrippe (34, 35) der Wickelwelle (11) eingreift. der Ansprüche

18. Wickelvorrichtung nach einem der Ansprüche 12 bis 17, **dadurch gekennzeichnet, daß** die Mitnehmerhülse (28) von ihrer Außenmantelfläche (33) nach außen vorragende etwa blattfederartige Fortsätze (36) bildet, welche, sich an der Innenmantelf läche (16) der Wickelwelle (11) abstützend, die Mitnehmerhülse (28) bezüglich der Wickelwellenachse (bei M) zentrieren.

19. Wickelvorrichtung nach einem der Ansprüche 13 bis 18, **dadurch gekennzeichnet, daß** die Mitnehmerhülse (28) sowohl drehfest als auch gegen Axialverschiebung gesichert in der Wickelwelle (11) angeordnet ist.

20. Wickelvorrichtung nach einem der Ansprüche 1 bis 19, **dadurch gekennzeichnet, daß** der äußere Endbereich (A) der Vorrichtungsachse (13) drehfest sowie gegen Axialverschiebung gesichert in einer Endkappe (40) aufgenommen ist.

21. Wickelvorrichtung nach einem der Ansprüche 13 bis 20, **dadurch gekennzeichnet, daß** die Kupplungsmittel (30, 31) durch Verschieben der Vorrichtungsachse (13) entgegen Federrückstellkraft (50) in Richtung (x) Mitnehmerhülse (28) außer Eingriff versetzbar sind.

22. Wickelvorrichtung nach Anspruch 21, **dadurch gekennzeichnet, daß** die Federrückstellkraft von einer zwischen Mitnehmerhülse (28) und Endkappe (40) wirkenden Feder (50), insbesondere von einer Schraubendruckfeder, gebildet ist.

23. Wickelvorrichtung nach einem der Ansprüche 1 bis 22, **gekennzeichnet durch** eine Doppelanordnung, bei welcher von jeder endseitigen öffnung (48) der Wickelwelle (11) eine Vorrichtungsachse (13) mit ihrem inneren Endbereich (I) axial in die Wickelwelle (11) frei hineinragt, wobei beide Torsionsfederspeicher (14) im jeweils entgegengesetzten Drehsinn aufziehbar und entspannbar sind.

## Claims

1. A winding device (10) for a web of material of a restraint device or such like of a vehicle such as, for example, an estate car or hatchback, with at least one device axle (13) which is detachably held in torsion-resistant manner on the mounting-bay side, with a torsion-spring storage device (14) surrounding the device axle (13), the first clamping end (*E*) of which is attached to the device axle (13), and the second clamping end (*Z*) of which is attached, adjacent to an axially outer end region (*A*) of the device axle (13), to a hollow winding shaft (11) supported coaxially in relation to the device axle (13), receiving said device axle (13) and the torsion-spring storage device (14), with the inner edge of the web of material being held on the external cylindrical surface of said winding shaft, the outer edge of the unwound web of material having to be detachably attached on the vehicle side, the first clamping end (*E*) of the torsion-spring storage device (14) being attached to the device axle (13), and the outer end region (*A*) of the device axle (13) exhibiting primary coupling means (30) which are capable of being put into or out of engagement with secondary coupling means (31) coupling the winding shaft (11), **characterised in that** the device axle (13), with its inner end region (*I*) at the front, freely projecting axially into the winding shaft (11), is arranged so as to be axially displaceable relative to the winding shaft (11), **in that** the first clamping end (*E*) is attached to the inner end region (*I*) of the device axle (13) and **in that** the primary coupling means (30) interact with the secondary coupling means (31) by axial displacement of the device axle (13) relative to the winding shaft (11).

2. Winding device according to Claim 1, **characterised in that** a driver element (28) which is received by the device axle (13) and which constitutes the secondary coupling means (31) and which is capable of being inserted jointly with the device axle (13) into the winding shaft (11) and is capable of being connected to said winding shaft in force-closed and/or positive manner so as to be resistant to torsion is integrated into the flux of force between the second clamping end (*Z*) of the torsion-spring storage device (14) and the winding shaft (11).

3. Winding device according to Claim 1, **characterised in that** the inner end region (*I*) of the device axle (13) is provided on the front face with a bearing arrangement (15) which is supported on the internal cylindrical surface (16) of the winding shaft (11) so as to be axially displaceable.

4. Winding device according to Claim 3, **characterised in that** the bearing arrangement (15) exhibits a bearing journal (17), which is attached to the front face of the inner end region (*I*) of the device axle (13), and a bearing shell (18), which is axially secured to said bearing journal and secured against co-rotation in the winding shaft (11).

5. Winding device according to Claim 4, **characterised in that** the bearing journal (17) exhibits an annular groove (19) which is coaxial in relation to the bearing-journal axis (*M*) and moulded into the external cylindrical surface of said bearing journal and in which the bearing shell (18) engages for axial securing thereof.

6. Winding device according to Claim 4 or according to Claim 5, **characterised in that** the bearing shell (18) is capable of latching radially onto the bearing journal (17).

7. Winding device according to one of Claims 4 to 6, **characterised in that** the bearing shell (18) exhibits an axial groove (21) which is open to the outside and in which an inwardly projecting axial rib (34, 35) of the winding shaft (11) engages.

8. Winding device according to one of Claims 4 to 7, **characterised in that** the bearing shell (18) forms approximately leaf-spring-like extensions (22) extending in the radial plane of the winding shaft (11), which, supported on the internal cylindrical surface (16) of the winding shaft (11), centre the bearing shell (18) with respect to the winding-shaft axis (*M*).

9. Winding device according to one of Claims 3 to 8, **characterised in that** at its front end the inner end region (*I*) of the device axle (13) forms driver surfaces (23), such as, for example, flattened portions or such like, which interact with corresponding driver surfaces (24) of a central recess (25) of the bearing journal (17) with a view to rotary entrainment.

10. Winding device according to one of Claims 4 to 9, **characterised in that** the bearing journal (17) forms an attachment region (26) for the purpose of torsion-resistant connection to the first clamping end (*I*) of the torsion-spring storage device (14).

11. Winding device according to Claim 10, **characterised in that** the attachment region of the bearing journal (17) forms a circular cylindrical lug (26), and the torsion-spring storage device (14) forms a helical spring, the clamping end (*E*) of which encompasses the circular cylindrical lug (26) in force-closed and torsion-resistant manner.

12. Winding device according to one of Claims 4 to 11, **characterised in that** the bearing journal (17) forms rotary-entrainment surfaces (27) on or adjacent to its end face facing away from the torsion-spring storage device (14).

13. Winding device according to one of Claims 1 to 12, **characterised in that** the driver element which has been integrated into the flux of force between the second clamping end (*Z*) of the torsion-spring storage device (14) and the winding shaft (11) is a driver sleeve (28) surrounding the device axle (13) coaxially.

14. Winding device according to Claim 13, **characterised in that** the driver sleeve (28) forms an attachment region (29) for the purpose of torsion-resistant connection to the second clamping end (*Z*) of the torsion-spring storage device (14).

15. Winding device according to Claim 14, **characterised in that** the attachment region of the driver sleeve (28) forms a circular cylindrical lug (29) pointing towards the inner end region (*I*) of the device axle, and the torsion-spring storage device (14) forms a helical spring, the second clamping end (*Z*) of which encompasses the circular cylindrical lug (29) in force-closed and torsion-resistant manner.

16. Winding device according to one of Claims 13 to 15, **characterised in that** the outer end region (*A*) of the device axle (13) forms, by way of primary coupling means, driver surfaces (30) capable of being disengaged in the axial direction (*x*), such as, for example, flattened portions or such like, which interact with corresponding opposing driver surfaces (31) capable of being axially disengaged, which are provided in a central coupling recess (32) of the driver sleeve (28).

17. Winding device according to one of Claims 13 to 16, **characterised in that** on its external cylindrical surface (33) the driver sleeve (28) exhibits at least one axial groove (53) which is open to the outside and in which, in each case, an inwardly projecting axial rib (34, 35) of the winding shaft (11) engages.

18. Winding device according to one of Claims 12 to 17, **characterised in that** the driver sleeve (28) forms approximately leaf-spring-like extensions (36) projecting outwards from its external cylindrical surface (33), which, supported on the internal cylindrical surface (16) of the winding shaft (11), centre the driver sleeve (28) with respect to the winding-shaft axis (at *M*).

19. Winding device according to one of Claims 13 to 18, **characterised in that** the driver sleeve (28) is arranged in the winding shaft (11) so as to be both torsion-resistant and secured against axial displacement.

20. Winding device according to one of Claims 1 to 19, **characterised in that** the outer end region (*A*) of the device axle (13) is received in an end cap (40) in torsion-resistant manner and is also secured against axial displacement.

21. Winding device according to one of Claims 13 to 20, **characterised in that** the coupling means (30, 31) are capable of being put out of engagement by displacing the device axle (13) in the direction (*x*) of the driver sleeve (28) contrary to the restoring force of a spring (50).

22. Winding device according to Claim 21, **characterised in that** the restoring force of a spring is produced by a spring (50) acting between the driver sleeve (28) and the end cap (40), in particular by a helical compression spring.

23. Winding device according to one of Claims 1 to 22, **characterised by** a dual arrangement in which a device axle (13) with its inner axial end region (*I*) freely projects axially into the winding shaft (11) from each end opening (48) of the winding shaft (11), both torsion-spring storage devices (14) being capable of being wound up and capable of being slackened in respectively opposite senses of rotation.

## Revendications

1. Dispositif d'enroulement (10) pour une bande de matériau, d'un dispositif de retenue ou analogue, d'un véhicule, tel que, par exemple, d'un véhicule automobile commercial, avec au moins un axe de dispositif (13), maintenu de façon désolidarisable et assujetti en rotation du côté du site de montage, avec un accumulateur de torsion à ressort (14) entourant l'axe de dispositif (13), dont une première extrémité d'enserrement (E) est fixée sur l'axe de dispositif (13) et dont la deuxième extrémité d'enserrement (Z) est fixée au voisinage d'une zone d'extrémité (A), axialement extérieure, de l'axe de dispositif (13), sur un arbre d'enroulement (11) creux, monté à rotation coaxialement par rapport à l'axe de dispositif (13), logeant ce dernier axe (13) et l'accumulateur de torsion à ressort (14), arbre d'enroulement (11) sur la surface d'enveloppe extérieure duquel est maintenu le bord intérieur de la bande de matériau, le bord extérieur de la bande de matériau déroulée étant à fixer de façon désolidarisable, côté véhicule, la première extrémité d'enserrement (E) de l'accumulateur de torsion à ressort (14) étant fixée sur l'axe de dispositif (13), et la zone d'extrémité extérieure (A) de l'axe de dispositif (13) présentant des moyens d'accouplement (30), qui peuvent être mis en prise ou hors de prise avec des moyens d'accouplement secondaire (31) assurant l'accouplement à l'arbre d'enroulement (11), **caractérisé en ce que** l'axe de dispositif (13) est disposé en pénétrant librement axialement, par sa zone d'extrémité (I) axialement intérieure avant, dans l'arbre d'enroulement (11), **en ce que** l'axe de dispositif (13) est disposé de façon axialement mobile par rapport à l'arbre d'enroulement (11), **en ce que** la première extrémité d'enserrement (E) est fixée sur la zone d'extrémité intérieure (I) de l'axe de dispositif (13), et **en ce que** les moyens d'accouplement primaire (30) coopèrent avec les moyens d'accouplement secondaires (31), par un déplacement axial de l'axe de dispositif (13) par rapport à l'arbre d'enroulement (11).

2. Dispositif d'enroulement selon la revendication 1, **caractérisé en ce que**, dans le flux des forces, entre la deuxième extrémité d'enserrement (Z) de l'accumulateur de torsion à ressort (14) et l'arbre d'enroulement (11), est impliquée une partie d'entraînement (28) supportée par l'axe de dispositif (13), partie d'entraînement formant les moyens d'accouplement secondaire (31) et insérée, conjointement avec l'axe de dispositif (13), dans l'arbre d'enroulement (11), et reliée à celui-ci de façon assujettie en rotation, par une liaison à interaction de forces et/ou à ajustement de formes.

3. Dispositif d'enroulement selon la revendication 1, **caractérisé en ce que** la zone d'extrémité intérieure (I) de l'axe de dispositif (13) est munie frontalement d'un dispositif formant palier (15), prenant appui, de façon mobile axialement, sur la surface d'enveloppe intérieure (16) de l'arbre d'enroulement (11).

4. Dispositif d'enroulement selon la revendication 3, **caractérisé en ce que** le dispositif formant palier (15) présente un tourillon de palier (17), fixé du côté frontal de la zone d'extrémité intérieure (I) de l'axe de dispositif (13), et une coquille ou coussinet de palier (18), assurée axialement sur ce dernier tourillon de palier et fixée contre tout entraînement en rotation dans l'arbre d'enroulement (11).

5. Dispositif d'enroulement selon la revendication 4, **caractérisé en ce que** le tourillon de palier (17) présente une gorge annulaire (19) coaxiale à son axe de tourillon de palier (M), creusée dans sa surface d'enveloppe extérieure, gorge annulaire dans laquelle s'engage le coussinet ou coquille de palier (18) pour assurer sa fixation axiale.

6. Dispositif d'enroulement selon la revendication 4 ou selon la revendication 5, **caractérisé en ce que** la coquille ou coussinet de palier (18) est susceptible d'être rapportée par encliquetage, radialement, sur le tourillon de palier (17) .

7. Dispositif d'enroulement selon l'une des revendications 4 à 6, **caractérisé en ce que** la coquille de palier (18) présente une rainure axiale (21) ouverte vers l'extérieur, dans laquelle s'engage une nervure axiale (34, 35), en saillie vers l'intérieur, de l'arbre d' enroulement (11).

8. Dispositif d'enroulement selon l'une des revendications 4 à 7, **caractérisé en ce que** la coquille ou coussinet de palier (18) forme des prolongements (22) s'étendant dans le plan radial de l'arbre d'enroulement (11), prolongements réalisés à peu près à la façon d'un ressort à lame, qui centrent la coquille de palier (18) par rapport à l'axe d'arbre d'enroulement (M), en prenant appui sur la surface d'enveloppe intérieure (16) de l'arbre d' enroulement (11).

9. Dispositif d'enroulement selon l'une des revendications 3 à 8, **caractérisé en ce que** la zone d'extrémité intérieure (I) de l'axe de dispositif (13) forme, sur son extrémité frontale, des faces d'entraînement (23), telles que, par exemple, des méplats ou analogues, qui coopèrent avec des faces d'entraînement (24) correspondantes d'un évidement (25) central du tourillon de palier (17), pour produire un entraînement en rotation.

10. Dispositif d'enroulement selon l'une des revendications 4 à 9, **caractérisé en ce que** le tourillon de palier (17) forme une zone de fixation (26), pour assurer une liaison assujettie en rotation avec l'extrémité d'enserrement (I) de l'accumulateur de torsion à ressort (14).

11. Dispositif d'enroulement selon la revendication 10, **caractérisé en ce que** la zone de fixation du tourillon de palier (17) forme un appendice (26) cylindrique à section transversale circulaire et l'accumulateur de torsion à ressort (14) forme un ressort hélicoïdal, dont l'extrémité d'enserrement (E) entoure, de façon assujettie en rotation, en faisant intervenir une liaison à interaction de forces, l'appendice (26) cylindrique à section transversale circulaire.

12. Dispositif d'enroulement selon l'une des revendications 4 à 11, **caractérisé en ce que**, dans ou au voisinage de sa face frontale opposée à l'accumulateur de torsion à ressort (14), le tourillon de palier (17) forme des faces d'entraînement en rotation (27).

13. Dispositif d'enroulement selon l'une des revendications 1 à 12, **caractérisé en ce que** la partie d'organe d'entraînement, impliquée dans le flux des forces entre la deuxième extrémité d'enserrement (Z) de l'accumulateur de torsion à ressort (14) et l'arbre d'enroulement (11), est une douille d'organe d'entraînement (28), entourant coaxialement l'axe de dispositif (13).

14. Dispositif d'enroulement selon la revendication 13, **caractérisé en ce que** la douille d'organe d'enroulement (28) forme une zone de fixation (29), pour assurer la liaison assujettie en rotation avec la deuxième extrémité d'enserrement (Z) de l'accumulateur de torsion à ressort (14)

15. Dispositif d'enroulement selon la revendication 14, **caractérisé en ce que** la zone de fixation de la douille d'organe d'entraînement (28) forme un appendice (29) cylindrique à section circulaire, tourné vers la zone d'extrémité (I) intérieure de l'axe de dispositif, et l'accumulateur de torsion à ressort (14) forme un ressort hélicoïdal, dont la deuxième extrémité d'enserrement (Z) entoure l'appendice (29) cylindrique à section circulaire, en produisant un assujettissement à rotation, permettant d'obtenir une liaison à interaction de forces.

16. Dispositif d'enroulement selon l'une des revendications 13 à 15, **caractérisé en ce que** la zone d'extrémité (A) extérieure de l'axe de dispositif (13) forme des faces d'entraînement (30) réalisées sous la forme de moyens d'accouplement primaires, susceptibles d'être débrayés en direction axiale (x), telles que des méplats ou analogues, qui coopèrent avec des faces conjuguées d'organes d'entraînement (31) correspondantes, susceptibles d'être détachées axialement, les faces d'accouplement secondaires, qui sont prévues dans un évidement d'accouplement (32) central de la douille d'organe d'entraînement (28).

17. Dispositif d'enroulement selon l'une des revendications 13 à 16, **caractérisé en ce que** la douille d'organe d'entraînement (28) présente, sur sa face d'enveloppe extérieure (33), au moins une rainure axiale (53) ouverte vers l'extérieur, dans laquelle s'engage chaque fois une nervure axiale (34, 35), en saillie vers l'intérieur, de l'arbre d'enroulement (11).

18. Dispositif d'enroulement selon l'une des revendications 12 à 17, **caractérisé en ce que** la douille d'organe d'entraînement (28) forme des prolongements (36) à peu près du genre de ressorts à lames, faisant quelque peu vers l'extérieur depuis sa face d'enveloppe extérieure (33), les appendices (36) ayant comme effet de centrer (en M) la douille d'organe d'entraînement (28) par rapport à l'axe d'entraînement, en prenant appui sur la face d'enveloppe intérieure (16) de l'arbre d'enroulement (11).

19. Dispositif d'enroulement selon l'une des revendications 13 à 18, **caractérisé en ce que** la douille d'organe d'entraînement (28) est disposée, tant de façon axialement assujettie en rotation, qu'également assurée contre tout déplacement axial, dans l'arbre d'enroulement (11).

20. Dispositif d'enroulement selon l'une des revendications 1 à 19, **caractérisé en ce que** la zone d'extrémité (A) extérieure de l'axe de dispositif (13) est logée, de façon assujettie en rotation et assurée contre tout déplacement axial, dans un capuchon d'extrémité (40).

21. Dispositif d'enroulement selon l'une des revendications 13 à 20, **caractérisé en ce que** les moyens d'accouplement (30, 31) sont susceptibles d'être mis hors de prise par un déplacement de l'axe de dispositif (13) à l'encontre de la force élastique de rappel (50) dans la direction (x) de la douille d'organe d'entraînement (28).

22. Dispositif d'enroulement selon la revendication 21, **caractérisé en ce que** la force de rappel élastique est formée par un ressort (50), agissant entre la douille d'organe d'entraînement (28) et le capuchon d'extrémité (40), en particulier formée par un ressort de compression hélicoïdal.

23. Dispositif d'enroulement selon l'une des revendications 1 à 22, **caractérisé par** un agencement double, pour lequel, depuis chaque ouverture (48), située côté extrémité, de l'arbre d'enroulement (11), un axe de dispositif (13) pénètre librement axialement, par sa zone d'extrémité intérieure (I), dans l'arbre d'enroulement (11), sachant que les deux accumulateurs de torsion à ressort (14) sont susceptibles d'être enroulés par traction et susceptibles d'être détendus, chaque fois dans un sens de rotation opposée.
